# EUROPÄISCHE PATENTSCHRIFT

(11) **EP 1 373 155 B1**
(45) Veröffentlichungstag und Bekanntmachung des Hinweises auf die Patenterteilung: **21.07.2004**
(21) Anmeldenummer: 02724202.3
(22) Anmeldetag: 06.03.2002
(51) Int. Cl.: C03C 3/085, C03C 3/091, B32B 9/00, C03C 4/04

(54) **ALKALIFREIES ALUMINOBOROSILICATGLAS UND VERWENDUNGEN**
ALUMINOBOROSILICATE GLASS DEVOID OF ALKALI AND USES THEREOF
VERRE D'ALUMINOBOROSILICATE EXEMPT D'ALCALIS ET SES UTILISATIONS

(30) Priorität: 24.03.2001 DE 10114581
(43) Veröffentlichungstag der Anmeldung: 02.01.2004
(73) Patentinhaber: Schott Glas, 55122 Mainz (DE); CARL-ZEISS-STIFTUNG trading as SCHOTT GLAS, 55122 Mainz (DE)
(72) Erfinder: PEUCHERT, Ulrich, 55294 Bodenheim (DE); GASCHLER, Ludwig, 55217 Mainz (DE)
(86) Internationale Anmeldenummer: PCT/EP2002/002432
(87) Internationale Veröffentlichungsnummer: WO 2002/076899

(56) Entgegenhaltungen:
- EP-A- 0 559 389
- EP-A- 0 672 629
- EP-A- 1 070 681
- EP-A- 1 078 893
- DE-C- 10 000 837
- US-A- 6 060 168
- PATENT ABSTRACTS OF JAPAN vol. 2000, no. 23, 10. Februar 2001 (2001-02-10) & JP 2001 151534 A (NIPPON ELECTRIC GLASS CO LTD), 5. Juni 2001 (2001-06-05)
- PATENT ABSTRACTS OF JAPAN vol. 2000, no. 02, 29. Februar 2000 (2000-02-29) & JP 11 322358 A (NIPPON SHEET GLASS CO LTD), 24. November 1999 (1999-11-24)

## Beschreibung

Gegenstand der Erfindung ist ein alkalifreies Aluminoborosilicatglas. Gegenstand der Erfindung sind auch Verwendungen dieses Glases.

An Gläser für Anwendungen als Substrate in der Flüssigkristall-Flachdisplaytechnologie, z. B. in TN (Twisted Nematic)/STN (Super Twisted Nematic) - Displays, Active Matrix Liquid Crystal Displays (AMLCD's), Thin Film Transistors (TFT's) oder Plasma Adressed Liquid Crystals (PALC's) werden hohe Anforderungen gestellt. Neben einer hohen Temperaturwechselbeständigkeit sowie einer guten Resistenz bezüglich der im Herstellungsverfahren der Flachbildschirme eingesetzten aggressiven Chemikalien sollten die Gläser eine über einen weiten Spektralbereich (VIS, UV) hohe Transparenz sowie zur Gewichtseinsparung eine geringe Dichte aufweisen. Der Einsatz als Trägermaterial für integrierte Halbleiterschaltkreise z. B. in TFT-Displays ("chip on glass") erfordert darüber hinaus die thermische Anpassung an das Dünnfilmmaterial Silicium. Dieses wird üblicherweise als amorphes Silicium (a-Si) bei niedrigen Temperaturen bis 300 °C auf dem Glassubstrat abgeschieden. Durch eine nachfolgende Wärmebehandlung bei Temperaturen von ca. 600 °C rekristallisiert das amorphe Silicium partiell. Die resultierende teilweise kristalline poly-Si-Schicht ist aufgrund der a-Si-Anteile charakterisiert durch einen Wert der thermischen Ausdehnung von α _{20/300} ≅ 3,7 x 10⁻⁶/K. Je nach dem Verhältnis von a-Si zu poly-Si kann der thermische Ausdehnungskoeffizient α _{20/300} zwischen 2,9 · 10⁻⁶/K und 4,2 · 10⁻⁶/K variieren.Werden durch Hochtemperaturbehandlungen oberhalb 700 °C bzw. direkte Abscheidung über CVD-Prozesse weitestgehend kristalline Si-Schichten generiert, so gewünscht auch in der Dünnschichtphotovoltaik, ist ein Substrat mit deutlich reduzierter thermischer Dehnung bis 3,2 x 10⁻⁶/K oder weniger erforderlich. Für Anwendungen in der Display- und Photovoltaiktechnologie ist ferner die Abwesenheit von Alkaliionen Bedingung. Herstellungsbedingte Anteile von Natriumoxid unterhalb 1500 ppm sind in Hinblick auf die i. a. "vergiftende" Wirkung durch Eindiffusion von Na⁺ in die Halbleiterschicht noch tolerierbar.

Geeignete Gläser sollten großtechnisch in ausreichender Qualität (keine Blasen, Knoten, Einschlüsse), z. B. auf einer Floatanlage oder in Ziehverfahren wirtschaftlich produzierbar sein. Besonders die Herstellung dünner (< 1 mm) streifenfreier Substrate von geringer Oberflächenwelligkeit über Ziehverfahren erfordert eine hohe Entglasungsstabilität der Gläser. Um einem auf die Halbleiter-Microstruktur nachteilig wirkenden Schrumpf ("compaction") des Substrates während der Herstellung, insbesondere im Falle von TFT-Displays, entgegen zu wirken, benötigt das Glas eine geeignete temperaturabhängige Viskositätskennlinie: Hinsichtlich der thermischen Prozeß- und Formstabilität sollte es bei einerseits nicht zu hohen Schmelz- und Verarbeitungs (V_{A}) -temperaturen, d. h. bei einem V_{A} ≤ 1350 °C, eine ausreichend hohe Transformationstemperatur, d. h. T_{g} > 700°C aufweisen.

Die Anforderungen an Glassubstrate für die LCD-Displaytechnologie bzw. Dünnschicht-Photovoltaik-Technologie sind auch in "Glass Substrates for AMLCD applications: properties and implications" von J.C. Lapp, SPIE Proceedings, Vol. 3014, Invited paper (1997) bzw. in "Photovoltaik-Strom aus der Sonne" von J. Schmid, Verlag C.F. Müller, Heidelberg 1994 beschrieben.

Mit dem Übergang zu größeren Displayformaten ergeben sich aus Produktionssicht neue Anforderungen an die mechanische Stabilität und das spezifische Gewicht der Glassubstrate. Beim Übergang von heute 600 mm x 720 mm großen Scheiben auf Scheibengrößen von z. B. 1 m x 1 m und größer würde sich das Gewicht entsprechend erhöhen, was Auswirkungen u. a. auf das Roboterhandling zur Überführung der Glasscheibe von einem Herstellungs-Prozesschritt zum anderen hätte. Zur Minimierung des "elastischen Saggings", worunter das Durchhängen der Scheiben aufgrund ihres Eigengewichts verstanden wird, ist daher ein Glas mit hohem E-Modul > 80 GPa, vorzugsweise ≥ 85 GPa in Kombination mit einer geringen Dichte < 2,55 g/cm³ wünschenswert. Dadurch minimiert sich auch die Gefahr des Durchbiegens der Scheibe bei der Beschichtung des Glassubstrates mit einer aktiven Siliziumschicht.

Die in "Mechanical Properties of AMLCD Glass Substrates", Proceedings of the XVIII International Congress on Glass", San Francisco, CA, USA, July 5-10,1998 beschriebenen Gläser weisen in dieser Hinsicht deutliche Nachteile auf.

Ähnliches gilt für die in den folgenden Schriften beschriebenen Gläser für Displayoder Solarzellensubstrate.

Sie erfüllen nicht den gesamten Anforderungskatalog für die genannten Anwendungen.

Zahlreiche Schriften beschreiben MgO-freie oder -arme Gläser, die aufgrunddessen nicht die geforderte hohe mechanische Stabilität aufweisen, so z. B. WO 97/11919, WO 97/11920, US 5,374,595, WO 00/32528, JP 9-156953A, JP 10-72237 A, EP 714 862 B, EP 341 313 B, DE 196 03 698 C1, DE 196 17 344 C1, DE 42 13 579 A und WO 98/27019.

Einige dieser Gläser sowie auch die Gläser der DE 197 39 912 C1 sowie ausweislich der Beispiele auch die der JP 9-48 632 A weisen relativ hohe Anteile der schweren Erdalkalioxide BaO und/oder SrO auf, was zu einer schlechten Schmelzbarkeit führt. Außerdem weisen solche Gläser eine unerwünscht hohe Dichte auf, was insbesondere für großformatige Displays nachteilhaft ist.

Gläser mit hohen Borsäuregehalten, wie sie in JP 8-295530 A beschrieben sind, sind zwar aufgrund niedriger Schmelztemperaturen leicht schmelzbar, besitzen aber keine ausreichende Temperaturbeständigkeit und keine ausreichende chemische Beständigkeit, insbesondere gegenüber salzsauren Lösungen. Auch weisen sie eher niedrige E-Moduln auf.

DE 196 01 922 A1 beschreibt SnO-haltige Gläser aus einem sehr variablen Zusammensetzungsbereich. Die ausweislich der Beispiele MgO-armen, B₂O₃reichen und BaO-reichen Gläser neigen aufgrund ihres zwingenden ZrO₂-Anteils zu Glasfehlern.

In den ungeprüften japanischen Veröffentlichungen JP 10-25132 A, JP 10-114538 A, JP 10-130034 A, JP 10-59741 A, JP 10-324526 A, JP 11-43350 A, JP 11-49520 A, JP 10-231139 A, JP 10-139467 A und JP 11-292563 A und JP 2000-159541 A werden sehr große und mit vielen fakultativen Komponenten variierbare Zusammensetzungsbereiche für Displaygläser genannt, denen jeweils ein oder mehrere bestimmte Läuterungsmittel zugesetzt werden. Diese Schriften geben jedoch keinerlei Hinweis, wie gezielt Gläser mit den kompletten beschriebenen Anforderungsprofil erhalten werden können.

Es ist Aufgabe der Erfindung, Gläser bereitzustellen, die das genannte komplexe Anforderungsprofil hinsichtlich der physikalischen und chemischen Eigenschaften, das an Glassubstrate für Flüssigkristall-Displays, insbesondere für TFT-Displays, und für Dünnschichtsolarzellen, insbesondere auf Basis von polykristallinem Si gestellt wird, erfüllen, Gläser, die eine hohe Temperaturbeständigkeit, einen prozeßgünstigen Verarbeitungsbereich, eine hohe chemische Beständigkeit und insbesondere eine ausreichende mechanische Festigkeit aufweisen.

Die Aufgabe wird durch ein alkalifreies Aluminoborosilicatglas aus dem Zusammensetzungsbereich gemäß dem Hauptanspruch gelöst.
Das Glas enthält > 58 bis 70 Gew.-% SiO₂. Bei geringeren Gehalten verschlechtert sich die chemische Beständigkeit, bei höheren Anteilen nimmt die thermische Ausdehnung zu geringe Werte an und nimmt die Kristallisationsneigung des Glases zu. Bevorzugt ist ein Höchstgehalt von 68 Gew.-%.

Das Glas enthält 10 bis 25 Gew.-% Al₂O₃. Dadurch wird die Entglasungsfestigkeit des Glases positiv beeinflusst, die thermische Stabilität erhöht sich, ohne die Verarbeitungstemperatur zu sehr anzuheben. Bevorzugt ist ein Gehalt von 14 bis 24 Gew.-% Al₂O₃.

Der B₂O₃-Gehalt beträgt 0,5 bis < 9 Gew.-%. Der B₂O₃-Gehalt ist auf den genannten Höchstgehalt beschränkt, um eine hohe mechanische Stabilität zu erzielen. Höhere Gehalte würden auch die chemische Beständigkeit gegenüber salzsauren Lösungen verschlechtern. Der genannte Mindestgehalt an B₂O₃ dient der Gewährleistung der guten Schmelzbarkeit und der guten Entglasungsfestigkeit des Glases. Bevorzugt ist ein Gehalt von 1 bis 8,5 Gew.-%. Besonders bevorzugt ist ein Höchstgehalt von 5 Gew.-%.

Ein wesentlicher Glasbestandteil sind die netzwerkwandelnden Erdalkalioxide. Bei einer Summe an Erdalkalioxiden zwischen > 8 und 18 Gew.-% wird ein thermischer Ausdehnungskoeffizient α _{20/300} zwischen 2,8 x 10⁻⁶/K und 3,9 x 10⁻⁶/K erreicht. MgO ist stets vorhanden, während CaO, SrO und BaO fakultative Bestandteile sind. Vorzugsweise sind wenigstens zwei Erdalkalioxide vorhanden. Besonders bevorzugt ist dieses zweite Erdalkalioxid CaO. Besonders bevorzugt ist das Vorhandensein von drei Erdalkalioxiden.

Das Glas enthält > 8 bis 15 Gew.-% MgO. Diese relativ hohen Anteile ermöglichen ein Glas mit einem für die gestiegenen Anforderungen ausreichend hohen E-Modul und mit geringer Dichte.
Vorzugsweise wird eine Abhängigkeit des B₂O₃-Gehalts vom MgO-Gehalt eingehalten, da B₂O₃ und MgO gegenläufig Einfluß auf den E-Modul haben. So beträgt das Gewichtsverhältnis MgO/B₂O₃ bevorzugt > 1, besonders bevorzugt > 1,35.
Bei noch höheren Anteilen an MgO verschlechtern sich die gute Kristallisationsbeständigkeit und die hohe chemische HCl-Beständigkeit des Glases.

Das Glas kann weiter bis zu < 10, bevorzugt bis zu < 9 Gew.-% CaO enthalten. Bei höheren Gehalten nimmt die Dichte zu hohe Werte an und nimmt die Kristallisationsneigung des Glases zu. Vorzugsweise enthält das Glas CaO, und zwar bevorzugt wenigstens 0,5 Gew.-%, besonders bevorzugt wenigstens 1 Gew.-%.

Das Glas kann auch BaO enthalten, was sich positiv auf seine Entglasungsstabilität ausweist. Der maximale Gehalt ist auf < 2 Gew.-% beschränkt, um die Dichte des Glases niedrig zu halten. Es ist besonders bevorzugt, dass das Glas zwischen 0 und 0,5 Gew.-% BaO enthält. Insbesondere, wenn das Glas sehr leicht sein soll, ist es ganz besonders bevorzugt, dass das Glas BaO-frei ist.

Das Glas kann auch SrO enthalten. Dessen Vorhandensein wirkt sich ebenfalls positiv auf die Entglasungsstabilität aus. Der maximale Gehalt an SrO ist auf < 3 Gew.-% beschränkt, um die Dichte des Glases niedrig zu halten. Es ist besonders bevorzugt, dass das Glas zwischen 0 und 1 Gew.-%, ganz besonders bevorzugt, dass es zwischen 0 und 0,5 Gew.-%, enthält.

Die Summe der beiden schweren Erdalkalioxide SrO und BaO ist vorzugsweise auf maximal 4 Gew.-% beschränkt.

Weiter kann die Komponente ZnO mit bis zu < 2 Gew.-% im Glas vorhanden sein. ZnO hat einen der Borsäure ähnelnden Einfluss auf die Viskositätskennlinie, wirkt netzwerklockernd und hat einen geringeren Einfluss auf die thermische Dehnung als die Erdalkalioxide. Vorzugsweise, insbesondere bei einer Verarbeitung des Glases im Floatverfahren, ist der ZnO-Anteil auf höchstens 1,5 Gew.-% beschränkt. Höhere Anteile würden die Gefahr störender ZnO-Beläge auf der Glasoberfläche erhöhen, die sich durch Verdampfung und anschließende Kondensation im Heißformgebungsbereich bilden können.

Das Glas ist alkalifrei. Unter alkalifrei wird hierbei verstanden, dass es im wesentlichen frei ist von Alkalioxiden, wobei es Verunreinigungen von weniger als 1500 ppm enthalten kann.

Das Glas kann bis zu 2 Gew.-% ZrO + TiO₂ enthalten, wobei sowohl der TiO₂-Gehalt als auch der ZrO₂-Gehalt einzeln bis zu 2 Gew.-% betragen kann. ZrO₂ erhöht' vorteilhaft die Temperaturstabilität des Glases. Aufgrund seiner Schwerlöslichkeit erhöht es jedoch die Gefahr von ZrO₂-haltigen Schmelzrelikten (sog. "Zirkonnester") im Glas. Daher wird vorzugsweise auf die Zugabe von ZrO₂ verzichtet. Geringe Gehalte an ZrO₂, die von der Korrosion zirkonhaltigen Wannenmaterials herrühren, sind unproblematisch. TiO₂ setzt vorteilhaft die Solarisationsneigung, d. h. die Abnahme der Transmission im sichtbaren Wellenlängenbereich aufgrund von UV-VIS-Strahlung, herab. Bei Gehalten von mehr als 2 Gew.-% können durch Komplexbildung mit Fe³⁺-Ionen, die im Glas in geringen Gehalten infolge von Verunreinigungen der eingesetzten Rohstoffe vorhanden sind, Farbstiche auftreten.

Das Glas kann herkömmliche Läutermittel in herkömmlichen Mengen enthalten: So kann es bis zu 1,5 Gew.-% As₂O₃, Sb₂O₃, SnO₂, CeO₂, Cl⁻, F und/oder SO₄²⁻ enthalten. Die Summe der Läutermittel soll jedoch 1,5 Gew.-% nicht überschreiten. Wenn auf die Läutermittel As₂O₃ und Sb₂O₃ verzichtet wird, ist das Glas nicht nur mit verschiedenen Ziehverfahren, sondern auch mit dem Floatverfahren verarbeitbar.

Beispielsweise im Hinblick auf eine einfache Gemengezubereitung ist es von Vorteil, dass sowohl auf ZrO₂ als auch auf SnO₂ verzichtet werden kann und dennoch Gläser mit dem genannten Eigenschaftsprofil, insbesondere mit hoher thermischer und chemischer Beständigkeit und mit geringer Kristallisationsneigung, erhalten werden.

### Ausführungsbeispiele:

Aus herkömmlichen, von unvermeidlichen Verunreinigungen abgesehen im wesentlichen alkalifreien, Rohstoffen wurden bei 1620°C Gläser in Pt/Ir-Tiegeln erschmolzen. Die Schmelze wurde anderthalb Stunden bei dieser Temperatur geläutert, anschließend in induktiv beheizte Platintiegel umgegossen und zur Homogenisierung 30 Minuten bei 1550°C gerührt. Die Schmelzen wurden in vorgeheizte Graphitformen gegossen und auf Raumtemperatur abgekühlt.

Die Tabelle zeigt acht Beispiele erfindungsgemäßer Gläser (A1 - A8) und ein Beispiel eines Vergleichsglases (V) mit ihren Zusammensetzungen (in Gew.-% auf Oxidbasis) und ihren wichtigsten Eigenschaften. Folgende Eigenschaften sind angegeben:
- der thermische Ausdehnungskoeffizient α _{20/300} [10⁻⁶/K]
- die Dichte ρ [g/cm³]
- " die dilatometrische Transformationstemperatur T_{g}[°C] nach DIN 52324
- die Temperatur bei der Viskosität 10⁴ dPas (bezeichnet als T 4 [°C])
- der Elastizitätsmodul E [GPa]
- eine Säurebeständigkeit "HCl" als Gewichtsverlust (Abtragswert) von allseitig polierten Glasplättchen der Abmessungen 50 mm x 50 mm x 2 mm nach Behandlung mit 5 %iger Salzsäure für 24 Stunden bei 95°C [mg/cm²].
- eine Laugenbeständigkeit "NaOH" als Gewichtsverlust (Abtragswert) von allseitig polierten Glasplättchen der Abmessungen 50 mm x 50 mm x 2 mm nach Behandlung mit 5 %iger Natronlauge für 6 h bei 95 °C (mg/cm²).
- eine Beständigkeit "BHF" gegenüber gepufferter Fluorwasserstoffsäure als Gewichtsverlust (Abtragswert) von allseitig polierten Glasplättchen der Abmessungen 50 mm x 50 mm x 2 mm nach Behandlung mit 10 % NH₄F · HF für 20 min bei 23 °C [mg/cm²]

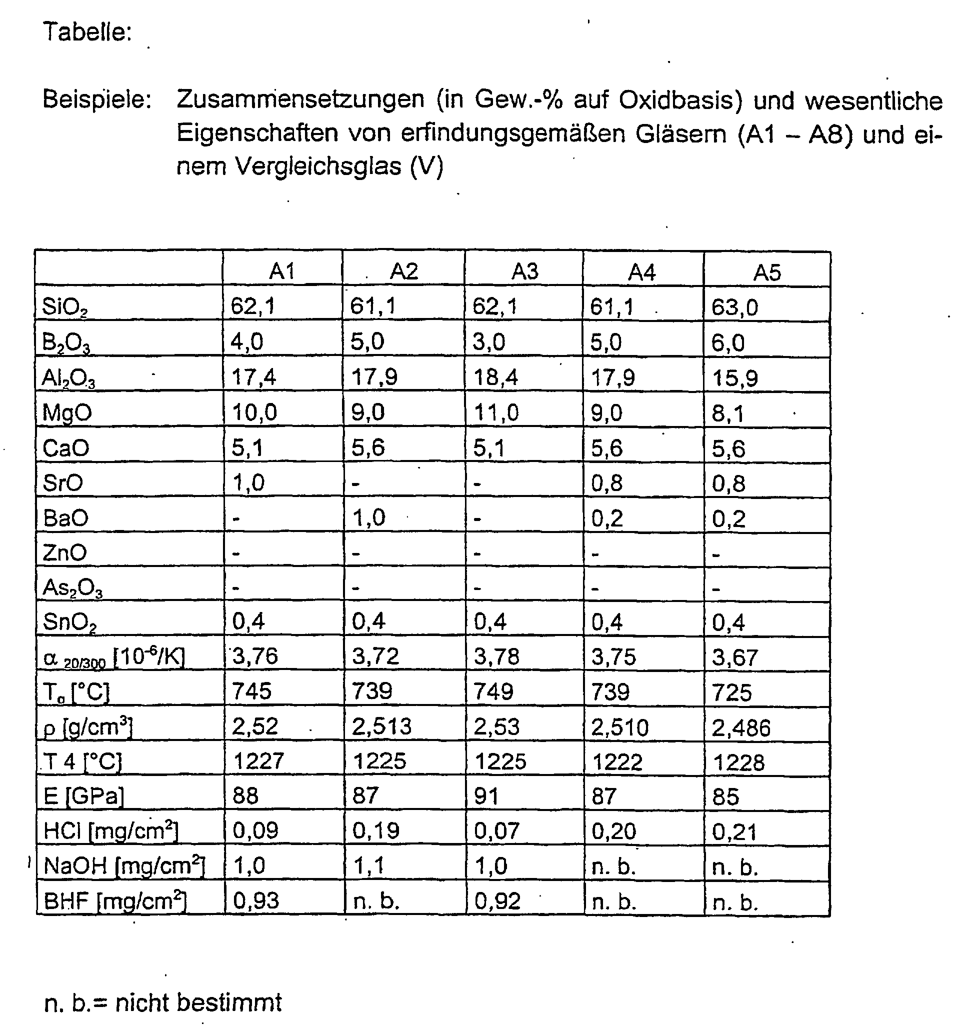

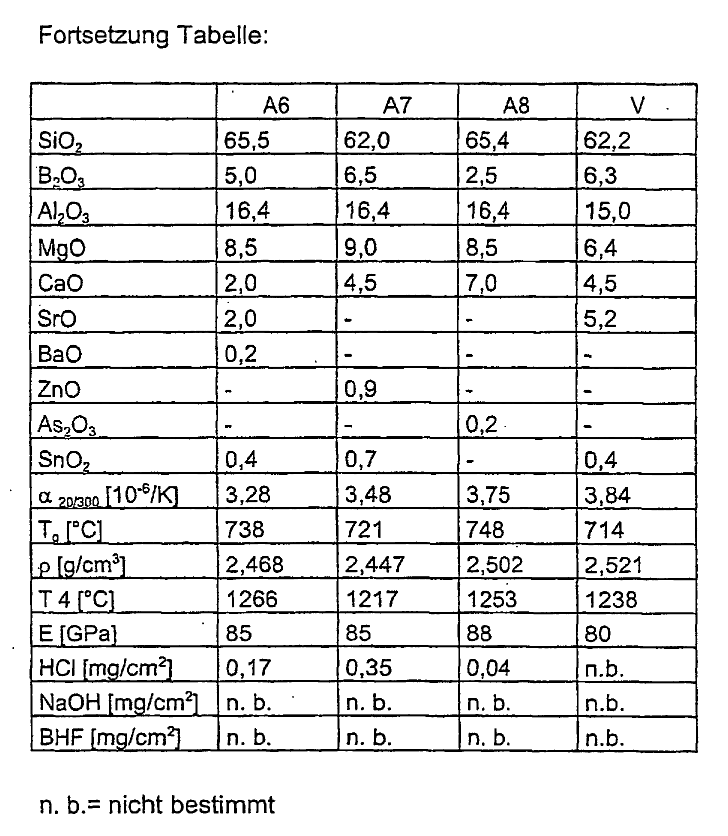

Wie die Ausführungsbeispiele verdeutlichen, besitzen die erfindungsgemäßen Gläser folgende vorteilhafte Eigenschaften:
- eine thermische Dehnung α _{20/300} zwischen 2,8 x 10⁻⁶/K und 3,9 x 10⁻⁶/K damit angepasst an das Ausdehnungsverhalten von polykristallinem Silizium.
- mit T_{g} > 710 °C eine hohe Transformationstemperatur, also eine hohe Temperaturbeständigkeit. Dies ist wesentlich für einen möglichst geringen herstellungsbedingten Schrumpf ("compaction") und für die Verwendung der Gläser als Substrate für Beschichtungen mit amorphen Si-Schichten und deren anschließende Temperung.
- mit ρ < 2,55 g/cm³ eine geringe Dichte
- mit E > 80 GPa einen hohen E-Modul. Er bzw. der hohe spezifische E-Modul E/ρ gewährleistet eine ausreichende mechanische Festigkeit, insbesondere im Hinblick auf die Problematik des "sagging".
- eine Temperatur bei der Viskosität 10⁴ dPas (Verarbeitungstemperatur V_{A}) von maximal 1300 °C. Damit und mit Temperaturen bei der Viskosität 10² dPas von maximal 1700 °C besitzen die Gläser eine hinsichtlich Heißformgebung sowie Schmelzbarkeit mit konventionellen Techniken geeignete Viskositätskennlinie.
- eine hohe chemische Beständigkeit, dokumentiert u. a. durch eine hervorragende Beständigkeit gegenüber salzsauren Lösungen, was sie ausreichend inert gegen die bei der Herstellung von Flachbildschirmen verwendeten Chemikalien macht.

Mit diesen Eigenschaften sind die Gläser hervorragend geeignet für die Verwendung als Substratglas in der Displaytechnik, insbesondere für TFT-Displays, und in der Dünnschicht-Photovoltaik, insbesondere auf Basis von polykristallinem Si, und als Substratglas für Festplatten.

## Patentansprüche

1. Alkalifreies Aluminoborosilicatglas, das folgende Zusammensetzung (in Gew.-% auf Oxidbasis) aufweist:
| | |
|---|---|
| SiO₂ | >58-70 |
| B₂O₃ | 0,5-< 9 |
| Al₂O₃ | 10-25 |
| MgO | > 8-15 |
| CaO | 0 -< 10 |
| SrO | 0 - < 3 |
| BaO | 0 - < 2 |
| mit MgO + CaO + SrO + BaO | > 8 - 18 |
| ZnO | 0 - < 2 |

2. Aluminoborosilicatglas nach Anspruch 1,
**gekennzeichnet durch**
folgende Zusammensetzung (in Gew.-% auf Oxidbasis):
| | |
|---|---|
| SiO₂ | > 58-68 |
| B₂O₃ | 1-8,5 |
| Al₂O₃ | 14-24 |
| MgO | > 8-15 |
| CaO | 0-9 |
| SrO | 0 - < 3 |
| BaO | 0 - < 2 |
| mit MgO + CaO + SrO + SaO | > 8 - 18 |
| ZnO | 0 - < 2 |

3. Aluminoborosilicatglas nach Anspruch 1 oder 2,
**dadurch gekennzeichnet,**
**dass** es zwischen 0 und 0,5 Gew.-% BaO enthält.

4. Aluminoborosilicatglas nach wenigstens einem der Ansprüche 1 bis 3,
**dadurch gekennzeichnet,**
**dass** es zwischen 0 und 1 Gew.-% SrO, vorzugsweise zwischen 0 und 0,5 Gew.-% SrO, enthält.

5. Aluminiumborosilicatglas nach wenigstens einem der Ansprüche 1 bis 4
**dadurch gekennzeichnet,**
**dass** es maximal 5 Gew.-% B₂O₃ enthält.

6. Aluminoborosilicatglas nach wenigstens einem der Ansprüche 1 bis 5,
**dadurch gekennzeichnet,**
**dass** es zusätzlich enthält:
| | |
|---|---|
| ZrO₂ | 0 - 2 |
| TiO₂ | 0 - 2 |
| mit ZrO₂ + TiO₂ | 0 - 2 |
| As₂O₃ | 0 - 1,5 |
| Sb₂O₃ | 0 - 1,5 |
| SnO₂ | 0 - 1,5 |
| CeO₂ | 0 - 1,5 |
| Cl⁻ | 0 - 1,5 |
| F- | 0 - 1,5 |
| SO₄²⁻ | 0 - 1,5 |
| mit As₂O₃ + Sb₂O₃ + SnO₂ + CeO₂ + Cl⁻ + F⁻ + SO₄²⁻ | ≤ 1,5 |

7. Aluminoborosilicatglas nach wenigstens einem der Ansprüche 1 bis 6, das einen thermischen Ausdehnungskoeffizienten α_{20/300} zwischen 2,8 · 10⁻⁶/K und 3,9 · 10⁻⁶/K, eine Transformationstemperatur Tg > 710 °C, eine Dichte ρ < 2,55 g/cm³ und eine "Säurebeständigkeit HCl" < 0,5 mg/cm² aufweist.

8. Aluminoborosilicatglas nach wenigstens einem der Ansprüche 1 bis 7,
das einen E-Modul von mehr als 80 GPa aufweist.

9. Verwendung des Aluminoborosilicatglases nach wenigstens einem der Ansprüche 1 bis 8 als Substratglas in der Displaytechnik.

10. Verwendung des Aluminoborosilicatglases nach wenigstens einem der Ansprüche 1 bis 8 als Substratglas in der Dünnschicht-Photovoltaik.

11. Verwendung des Aluminoborosilicatglases nach wenigstens einem der Ansprüche 1 bis 8 zur Herstellung eines Substratglases für Festplatten.

## Revendications

1. Verre aluminoborosilicaté exempt de métaux alcalins, qui présente la composition suivante (en % en poids sur base d'oxydes) :
| | |
|---|---|
| SiO₂ | > 58 à 70 |
| B₂O₃ | 0,5 à < 9 |
| Al₂O₃ | 10 à 25 |
| MgO | > 8 à 15 |
| CaO | 0 à < 10 |
| SrO | 0 à < 3 |
| BaO | 0 à < 2 |
| avec MgO + CaO + SrO + BaO | > 8 à 18 |
| ZnO | 0 à < 2 |

2. Verre aluminoborosilicaté selon la revendication 1, **caractérisé par** la composition suivante (en % en poids sur base d'oxydes) :
| | |
|---|---|
| SiO₂ | > 58 à 68 |
| B₂O₃ | 1 à 8,5 |
| Al₂O₃ | 14 à 24 |
| MgO | > 8 à 15 |
| CaO | 0 à < 9 |
| SrO | 0 à < 3 |
| BaO | 0 à < 2 |
| Avec MgO + Cao + SrO + BaO | > 8 à 18 |
| ZnO | 0 à < 2 |

3. Verre aluminoborosilicaté selon la revendication 1 ou 2, **caractérisé en ce qu'**il contient de 0% à 0,5% en poids de BaO.

4. Verre aluminoborosilicaté selon au moins l'une quelconque des revendications 1 à 3, **caractérisé en ce qu'**il contient de 0 à 1% en poids de SrO, de préférence de 0 à 0,5% en poids de SrO.

5. Verre aluminoborosilicaté selon au moins l'une quelconque des revendications 1 à 4, **caractérisé en ce qu'**il contient au plus 5% en poids de B₂O₃.

6. Verre aluminoborosilicaté selon au moins l'une quelconque des revendications 1 à 5, **caractérisé en ce qu'**il contient en outre :
| | |
|---|---|
| ZrO₂ | 0 à 2 |
| TiO₂ | 0 à 2 |
| avec ZrO₂ + TiO₂ | 0 à 2 |
| As₂O₃ | 0 à 1,5 |
| Sb₂O₃ | 0 à 1, 5 |
| SnO₂ | 0 à 1,5 |
| CeO₂ | 0 à 1,5 |
| Cl⁻ | 0 à 1,5 |
| F⁻ | 0 à 1,5 |
| SO₄²⁻ | 0 à 1,5 |
| avec As₂O₃ + Sb₂O₃ + SnO₂ + CeO₂ + Cl⁻ + F⁻ + SO₄ ²⁻ ≤ 1,5. | |

7. Verre aluminoborosilicaté selon au moins l'une quelconque des revendications 1 à 6, qui présente un coefficient de dilatation thermique α_{20/300} de 2,8 x 10⁻⁶/K à 3,9 x 10⁻⁶/K, une température de transformation T_{g} > 710°C, une densité ρ < 2,55 g/cm³ et une « résistance à l'acide HCl » de < 0, 5 mg/cm².

8. Verre aluminoborosilicaté selon au moins l'une quelconque des revendications 1 à 7, qui présente un module d'élasticité supérieur à 80 GPa.

9. Utilisation du verre aluminoborosilicaté selon au moins l'une quelconque des revendications 1 à 8 comme verre substrat dans la technique d'affichage.

10. Utilisation du verre aluminoborosilicaté selon au moins l'une quelconque des revendications 1 à 8 comme verre substrat dans le domaine de la technologie photovoltaïque en couche mince.

11. Utilisation du verre aluminoborosilicaté selon au moins l'une quelconque des revendications 1 à 8 dans la fabrication d'un verre substrat pour disques durs.

## Claims

1. Alkali-free aluminoborosilicate glass which has the following composition (in % by weight, based on oxide):
| | |
|---|---|
| SiO₂ | > 58 - 70 |
| B₂O₃ | 0.5 - < 9 |
| Al₂O₃ | 10 - 25 |
| MgO | > 8 - 15 |
| CaO | 0 - < 10 |
| SrO | 0 - < 3 |
| BaO | 0 - < 2 |
| with MgO + CaO + SrO + BaO | > 8 - 18 |
| ZnO | 0 - < 2 |

2. Aluminoborosilicate glass according to Claim 1, **characterized by** the following composition (in % by weight, based on oxide):
| | |
|---|---|
| SiO₂ | > 58 - 68 |
| B₂O₃ | 1 - 8.5 |
| Al₂O₃ | 14 - 24 |
| MgO | > 8 - 15 |
| CaO | 0 - 9 |
| SrO | 0 - < 3 |
| BaO | 0 - < 2 |
| with MgO + CaO + SrO + BaO | > 8 - 18 |
| ZnO | 0 - < 2 |

3. Aluminoborosilicate glass according to Claim 1 or 2, **characterized in that** it comprises between 0 and 0.5% by weight of BaO.

4. Aluminoborosilicate glass according to at least one of Claims 1 to 3, **characterized in that** it comprises between 0 and 1% by weight of SrO, preferably between 0 and 0.5% by weight of SrO.

5. Aluminoborosilicate glass according to at least one of Claims 1 to 4, **characterized in that** it comprises at most 5% by weight of B₂O₃.

6. Aluminoborosilicate glass according to at least one of Claims 1 to 5, **characterized in that** it additionally comprises:
| | |
|---|---|
| ZrO₂ | 0 - 2 |
| TiO₂ | 0 - 2 |
| with ZrO₂ + TiO₂ | 0 - 2 |
| As₂O₃ | 0 - 1.5 |
| Sb₂O₃ | 0 - 1.5 |
| SnO₂ | 0 - 1.5 |
| CeO₂ | 0 - 1.5 |
| Cl⁻ | 0 - 1.5 |
| F⁻ | 0 - 1.5 |
| SO₄²⁻ | 0 - 1.5 |
| with As₂O₃ + Sb₂O₃ + SnO₂ + CeO₂ + Cl⁻ + F⁻ + SO₄²⁻ | ≤ 1.5 |

7. Aluminoborosilicate glass according to at least one of Claims 1 to 6, which has a coefficient of thermal expansion α_{20/300} of between 2.8 · 10⁻⁶/K and 3.9 · 10⁻⁶/K, a glass transition temperature Tg of > 710°C, a density ρ of < 2.55 g/cm³ and an "acid resistance HCl" of < 0.5 mg/cm².

8. Aluminoborosilicate glass according to at least one of Claims 1 to 7, which has a modulus of elasticity of more than 80 GPa.

9. Use of the aluminoborosilicate glass according to at least one of Claims 1 to 8 as substrate glass in display technology.

10. Use of the aluminoborosilicate glass according to at least one of Claims 1 to 8 as substrate glass in thin-film photovoltaics.

11. Use of the aluminoborosilicate glass according to at least one of Claims 1 to 8 for the preparation of a substrate glass for hard disks.
